(19) Europäisches Patentamt / European Patent Office / Office européen des brevets

(11) **EP 4 273 622 A1**

(12) **EUROPEAN PATENT APPLICATION**

(43) Date of publication:
**08.11.2023 Bulletin 2023/45**

(21) Application number: **22171192.2**

(22) Date of filing: **02.05.2022**

(51) International Patent Classification (IPC):
**G02F 1/35** *(2006.01)*        **G02F 1/365** *(2006.01)*

(52) Cooperative Patent Classification (CPC):
**G02F 1/365; G02F 1/3528**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ASML Netherlands B.V.
5500 AH Veldhoven (NL)**

(72) Inventors:
• **UEBEL, Patrick, Sebastian
  5500 AH Veldhoven (NL)**

• **PONGERS, Willem, Richard
  5500 AH Veldhoven (NL)**
• **KOHLER, Johannes, Richard, Karl
  5500 AH Veldhoven (NL)**
• **NI, Yongfeng
  5500 AH Veldhoven (NL)**

(74) Representative: **ASML Netherlands B.V.
Corporate Intellectual Property
P.O. Box 324
5500 AH Veldhoven (NL)**

(54) **HOLLOW-CORE OPTICAL FIBER BASED RADIATION SOURCE**

(57)    A broadband radiation device, comprising: a pulse shaper configured to impose a temporal profile onto an input pump pulse so as to generate a temporally-modulated pump pulse, the temporally-modulated pump pulse having a different temporal profile than the input pump pulse; and
a hollow-core photonic crystal fiber (HC-PCF) having a hollow core for confining in use a working medium under a pressure, the HC-PCF being operable to receive the temporally-modulated pump pulse; wherein the temporally-modulated pump pulse is configured to be spectrally broadened by a soliton selfcompression process to form broadband output radiation while propagating through the hollow core of the HC-PCF; and said temporal profile is configured so as to configure a spectrum of the broadband output radiation to have target spectrum characteristics.

**Fig. 13**

**Description**

<u>FIELD</u>

The present invention relates to a hollow-core optical fiber based broadband radiation source, and in particular such a broadband radiation source in relation to metrology applications in the manufacture of integrated circuits.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as $CD = k_1 \times \lambda/NA$, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation.

<u>SUMMARY</u>

In a first aspect of the invention there is provided a broadband radiation device, comprising: a pulse shaper configured to impose a temporal profile onto an input pump pulse so as to generate a temporally-modulated pump pulse, the temporally-modulated pump pulse having a different temporal profile than the input pump pulse; and a hollow-core photonic crystal fiber (HC-PCF) having a hollow core for confining in use a working medium under a pressure, the HC-PCF being operable to receive the temporally-modulated pump pulse; wherein the temporally-modulated pump pulse is configured to be spectrally broadened by a soliton self-compression process to form broadband output radiation while propagating through the hollow core of the HC-PCF; and said temporal profile is configured so as to configure a spectrum of the broadband output radiation to have target spectrum characteristics.

In a second aspect of the invention there is provided a method of optimizing a temporal profile of a pump pulse which is to undergo spectral broadening via a soliton self-compression process within a working medium inside a hollow-core photonic crystal fiber (HC-PCF), so as to form broadband output radiation; the method comprising: optimizing the temporal profile so as to configure the broadband output radiation to have target spectrum characteristics.

In a third aspect of the invention there is provided a method of generating broadband output radiation with target spectrum characteristics, the method comprising: imposing a temporal profile onto an input pump pulse so as to generate the temporally-modulated pump pulse, the temporally-modulated pump pulse having a different temporal profile than the input pump pulse, the temporal profile being configured so as to configure a spectrum of the broadband output radiation to have target spectrum characteristics; using the temporally-modulated pump pulse to excite a working medium within a hollow-core photonic crystal fiber (HC-PCF) such that the temporally-modulated pump pulse is spectrally broadened by a soliton self-compression process to form said broadband output radiation with said target spectrum characteristics.

Other aspects of the invention comprise metrology device comprising the broadband radiation device of the first aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 is a schematic cross sectional view of a hollow core optical fiber that may form part of a radiation source according to an embodiment in a transverse plane (i.e. perpendicular to an axis of the optical fiber);
- Figure 8 depicts a schematic representation of a radiation source according to an embodiment for providing broadband output radiation;
- Figures 9 (a) and (b) schematically depict the transverse cross-sections of examples of hollow core photonic crystal fiber (HC-PCF) designs for supercontinuum generation;
- Figure 10A shows a wavelength $\lambda$-power spectral density plot (or signal sig (dB)) against position P along the fiber length for a simulation, describing the soliton self-compression based spectral evolution of a pulse of pump radiation within the hollow core optical fiber of the radiation source shown in Figure 8;
- Figure 10B shows a time t-power spectral density plot (or signal sig (dB)) against position P along the fiber length for a simulation, describing the soliton self-compression based temporal evolution of the pulse of pump radiation within the hollow core optical fiber (up to the maximum compression point) of the same radiation source;
- Figure 11 shows an example simulated spectrum of the broadband output radiation generated by the soliton self-compression based spectral broadening of a pulse of pump radiation within the hollow core optical fiber of the radiation source shown in Figure 8;
- Figure 12A shows a forward soliton self-compression based nonlinear process for converting an input pump pulse to a broadband output radiation having undesired spectrum characteristics;
- Figure 12B shows a backward soliton self-compression based nonlinear process for converting a broadband output radiation having target spectrum characteristics to a target pump pulse having a desired or target temporal profile;
- Figure 13 depicts schematically a first radiation source equipped with a pulse shaper, according to an embodiment, for providing broadband output radiation having target spectrum characteristics;
- Figure 14 depicts schematically a second radiation source equipped with a pulse shaper, according to an embodiment, for providing broadband output radiation having target characteristics;
- Figure 15 is a flow diagram of a method of optimizing a temporal profile of a pump pulse for use in the second radiation source shown in Figure 14; and
- Figure 16 depicts a block diagram of a computer system for controlling a broadband radiation source.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

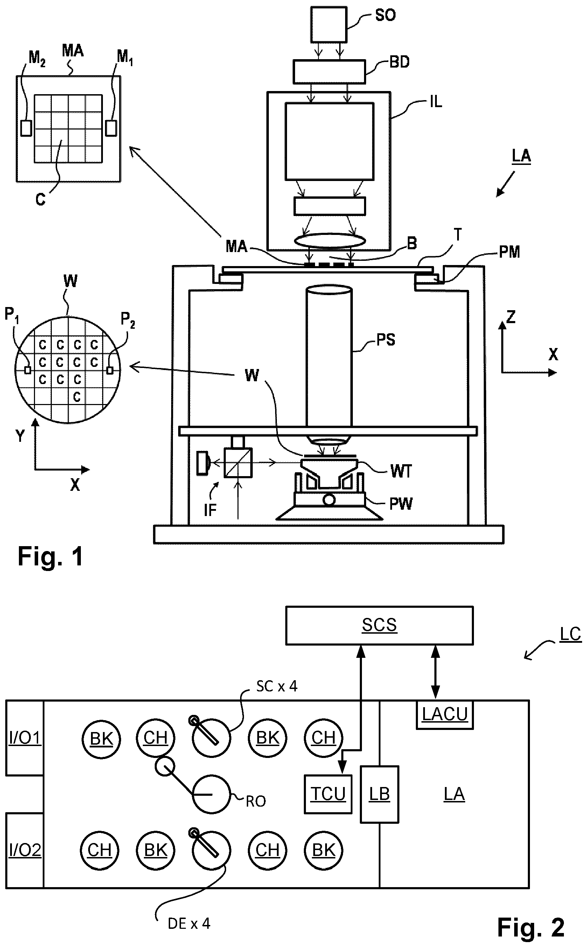

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

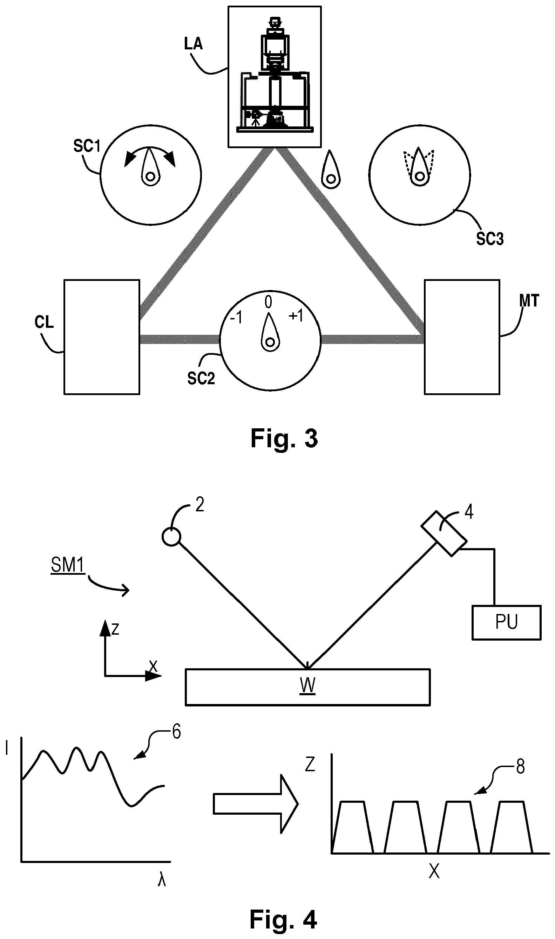

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

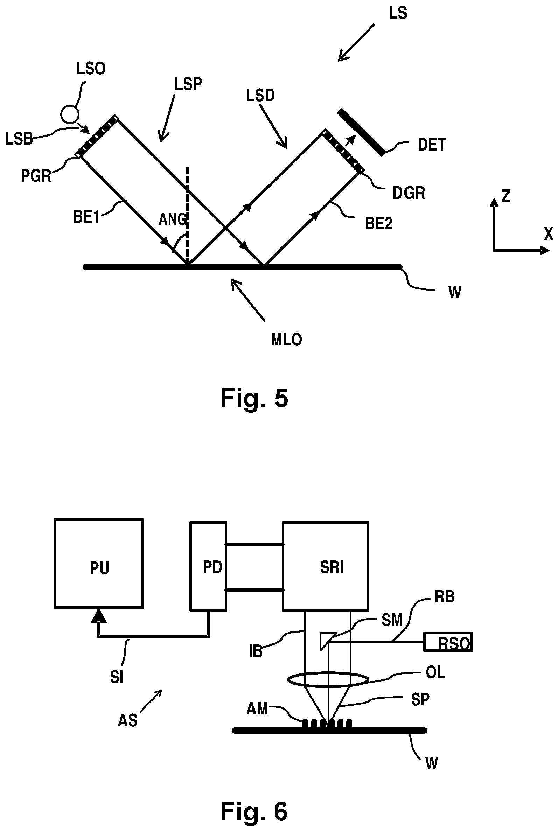

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

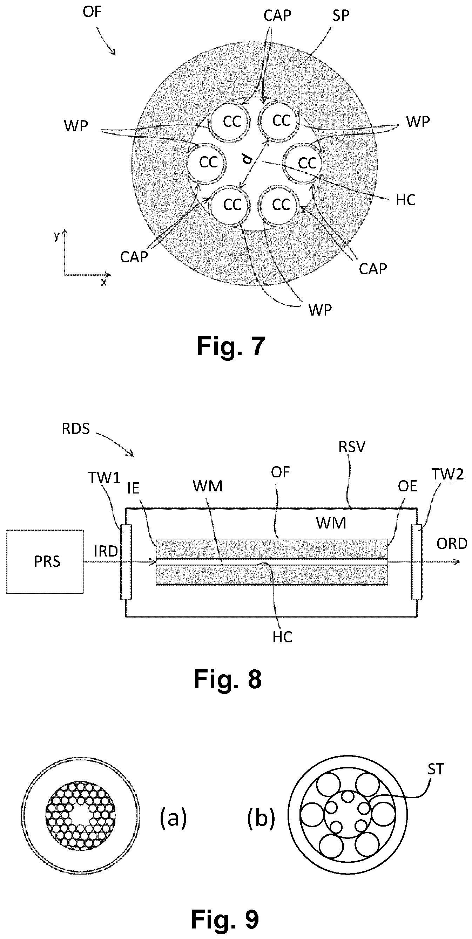

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm. In an embodiment, the optical fiber OF may be a tapered fiber which may comprise a waist section. The waist section may comprise a tapering-down section where the fiber diameter is reduced. In an embodiment, the waist section may further comprise a central region of constant diameter. In an embodiment, the waist section may further comprise a tapering-up section where the fiber diameter is increased to the original diameter. The length of the taper waist section can extend from e.g., a few millimeters to several tens of centimeters. The taper waist section with a longer length of e.g., 10s of meters, may be possible if the fiber parameters are varied during fiber drawing.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 $\mu$m.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 $\mu$m. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 9(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 9(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figures 9 (a) and (b) may have a circular cross-sectional shape. Other shapes are also possible for the tubular capillaries, like elliptical or polygonal cross-sections. Additionally, the solid material of the tubular capillaries of the examples of Figure 7 and Figures 9 (a) and (b) may comprise plastic material, like PMA, glass, like silica, or soft glass.

Figure 8 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a gas) disposed within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 0.1 $\mu$J to 100 $\mu$J, for example 1-10 $\mu$J. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

As described above, there are many nonlinear optical processes involved in generation of broadband output radiation ORD (e.g., supercontinuum or white light). Which nonlinear optical process has a more pronounced spectral broadening effect over the others will depend on how the operating parameters are set. For example, by selecting a pump wavelength and/or an optical fiber OF such that the pump pulse propagates through the fiber in a normal dispersion region (positive group velocity dispersion (GVD)), self-phase modulation is the dominant nonlinear optical process and is responsible for spectral expansion of the pump pulse. However in most cases, spectral broadening of input radiation IRD provided by the pulsed pump radiation source PRS is driven by soliton dynamics which require a pump pulse to propagate in an optical fiber OF in the anomalous dispersion region (negative GVD). This is because, in the anomalous dispersion region, the effects of Kerr nonlinearity and dispersion act in opposition to each other. When the pulse parameters of a pump pulse, which is launched into an optical fiber OF (e.g., HC-PCF) with anomalous chromatic dispersion, do not exactly match those of a soliton, the pump pulse will evolve into a soliton pulse with a certain soliton order and a dispersive wave.

It is known that soliton self-compression and modulation instability are the two primary mechanisms for spectral broadening in soliton driven broadband radiation generation. The distinction between the two mechanisms is that the soliton self-compression process is associated with low soliton orders whereas the modulation instability process is associated with high soliton orders. The soliton order N of the pulsed input radiation IRD is a convenient parameter that can be used to distinguish conditions under which spectral broadening is dominated by modulation instability and conditions under which spectral broadening is dominated by soliton self-compression. The soliton order N of the pulsed input radiation IRD is given by:

$$N = \sqrt{\gamma \frac{P_p \tau^2}{|\beta_2|}}$$ (1)

where $\gamma$ is a nonlinear phase (or nonlinear parameter); $P_p$ is a pump peak power of the pulsed input radiation IRD; $\tau$ is a pump pulse duration of the pulsed input radiation IRD; and $\beta_2$ is the group-velocity dispersion of the working medium WM.

Spectral broadening is typically dominated by modulation instability when N >> 20 whereas spectral broadening is typically dominated by soliton self-compression when $N$ << 20.

Some known broadband radiation sources use arrangements which produce spectral broadening of pulsed pump radiation but wherein parameters of the pulsed pump radiation, the optical fiber and the working medium are configured to allow modulation instability to produce the spectral broadening. There are a number of reasons why modulation instability is used to produce the spectral broadening. First, modulation instability is known to produce broadband radiation having a relatively flat intensitywavelength distribution, provided a sufficient number of pulses are averaged. Such a broadband radiation source may be referred to as a white light radiation source (due to the relatively flat spectral intensity distribution). Second, modulation instability can be achieved using relatively economical laser sources as the pump radiation source.

On the other hand, in the regime of soliton self-compression, an input pump pulse undergoes compression in the time domain, which is accompanied by an increase in a width of the spectrum. Following soliton self-compression, the compressed pulse undergoes soliton fission, wherein the pulse splits into a plurality of solitons. This soliton fission results in temporal broadening of the radiation pulse and a shifting of the spectrum.

In contrast to the noise-seeded modulation instability systems, broadband radiation generated by such soliton self-compression will have substantially no shot-to-shot variations. This is because in the soliton self-compression process, a moderate nonlinearity and anomalous dispersion co-operate to gradually and smoothly compress the duration of an input pump pulse along the fiber whereas in the MI process, the input pump pulse is disintegrated, due to a strong amplification of noise, into a sequence of random sub-pulses ("soliton shower"). As a result, advantageously, in a soliton self-compression system, each single compressed pulse features essentially the same broadband spectrum. In contrast, a modulation instability system would require integration over many pulses to obtain a broadband spectrum and reduce its inherent shot-to-shot variations. The intensity noise of the broadband output radiation ORD generated from a soliton self-compression system can be several (e.g., two) orders of magnitude lower than that of the broadband output radiation ORD generated from a modulation instability system and is typically limited by the noise of the pump laser.

As can be seen from equation (1), the soliton order of the input pulsed pump radiation is proportional to the pulse duration $\tau$ of the pulsed input radiation IRD. Therefore, generally prior art arrangements wherein soliton self-compression dominates, typically the pulse duration $\tau$ of the input pulsed input radiation IRD is reduced to of the order of 30 fs or less. To realize such an arrangement, typically a compressed, high-power femtosecond-fiber lasers (e.g., fiber based chirped pulse amplification systems (FCPA)) or Ti:Sapphire amplifiers are used as the pulsed pump radiation source PRS. Such laser systems are relatively bulky (a femtosecond-fiber laser head has, for example, dimensions of 60×40×20 cm) and, in most cases, require external controllers and water chillers. In addition, such laser systems are relatively cost intensive.

The inventors have realized that the soliton order of the pulsed input radiation IRD can alternatively be reduced by reducing the pulse energy $E_p$ of the pulsed input radiation IRD (where $E_p = P_p\tau$). For example, if all other parameters remain constant, by reducing the pulse energy $E_p$ of the pulsed input radiation IRD by a factor of $\alpha$, the same soliton order can be achieved using a pulse duration that is increased by a factor of $\alpha$. This approach relaxes the requirement of short pulse durations (e.g., 30 fs or less) for soliton self-compression based spectral broadening. As a result, significantly longer pulse durations (e.g., 100 fs or more) and therefore more economical laser sources can be used for soliton self-compression.

In a soliton self-compression regime (with a relatively low soliton number), a pulse of input radiation IRD can undergo significant temporal compression, which is accompanied by spectral broadening. Eventually, the temporal compression will reach a maximal level (corresponding to a minimum temporal extent of the pulsed radiation) followed by temporal broadening of the radiation (soliton fission). The (higher order) soliton may oscillate between periods of temporal compression and temporal broadening as it propagates along the hollow core optical fiber. Following temporal broadening, other effects can lead to shifting of the spectrum of the radiation. For example, self-steepening (which may accompany and aid the soliton self-compression) can lead to an optical shock which can seed dispersive wave emission. By tuning the parameters of the system, a particular, desirable wavelength may be generated. For example, the wavelength may be selected so as to be suitable for interacting with a particular molecule and used in research experiments studying said molecule. Therefore, soliton self-compression is a known regime for generating from an input pump laser beam having first wavelength, an output radiation beam having a second, shifted wavelength.

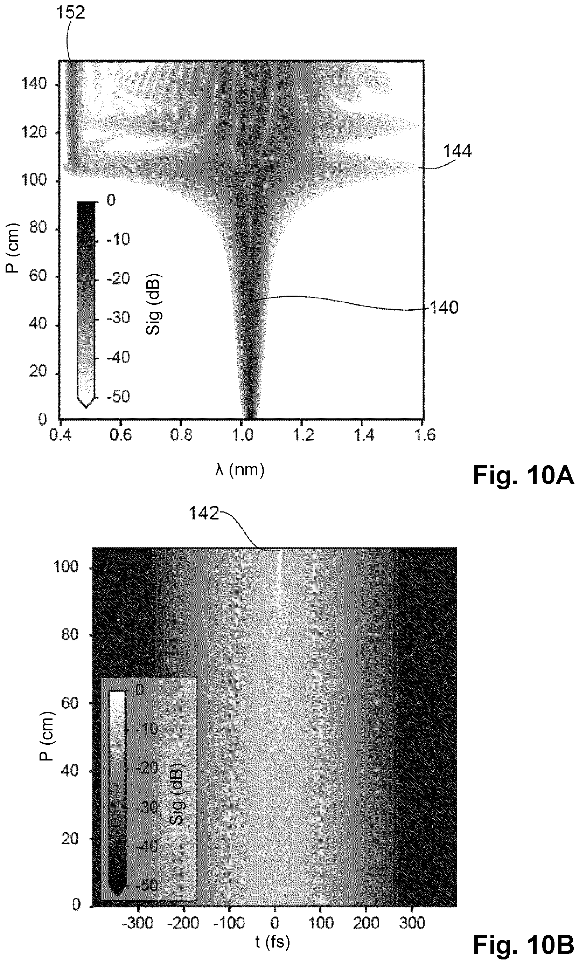

Figure 10A shows a wavelength $\lambda$-power spectral density plot (or signal sig (dB)) against position P along the fiber length for a simulation, describing the soliton self-compression based spectral evolution of a pulse of radiation within the hollow core HC optical fiber OF of the radiation source RDS shown in Figure 8. The hollow core HC optical fiber OF (e.g., a single ring HC-ARF as illustrated in Figure 7) has a length of 150 cm and a core diameter of 32.5 $\mu$m. The hollow core HC may be filled with a working medium WM of Krypton gas at a pressure of 10 bar. In this example, the pulsed input radiation IRD has a pump pulse duration of $\tau$ of 150 fs, a pulse energy $E_p$ of 0.4 $\mu$J energy and a wavelength $\lambda$ of 1030 nm. This pulse energy $E_p$ is approximately one order of magnitude lower than in currently used in modulation instability driven broadband light sources. This configuration allows pumping in the anomalous dispersion regime ($\beta_2$ = - 6.3 fs$^2$/cm at the pump wavelength of 1030 nm). The soliton order of $N$ = 17 allows soliton self-compression of the pulsed input radiation IRD so as to change a spectrum of the pulsed pump radiation so as to form broadband output radiation ORD.

With reference to Figure 10A, in a first portion of the hollow core HC optical fiber OF (e.g., between the input end IE of the fiber OF and a position approximately 100 cm from the input end IE), the input radiation IRD undergoes self-phase modulation 140 which continuously broadens the spectrum of the input radiation IRD. This is followed by soliton self-compression 142, as shown in Figure 10B, a temporal extent of the input radiation IRD being minimal at a distance of approximately 110 cm from the input end IE of the hollow core HC optical fiber OF. The soliton self-compression is accompanied by significant broadening 144 of the spectrum of the radiation. That is to say, while the temporal extent of the input radiation IRD is minimal, the breadth of the spectrum of the input radiation IRD is maximal.

Generally, after the soliton self-compression, the breadth of the spectrum of the pulsed input radiation IRD may decrease and/or gaps in the spectrum may develop (for example as the soliton evolves and as dispersive waves are emitted). It can be seen in Figure 10A that following the soliton self-compression and associated spectral broadening 144, the spectrum of radiation undergoes a number of changes. For example, a dispersive wave 152 is emitted and, the radiation oscillates between periods of spectral compression and spectral broadening.

One shortcoming of the soliton self-compression based spectral broadening is that the conversion efficiency from the pulsed input radiation IRD into the visible wavelength range (e.g., 400 nm - 700 nm) is low. This is because the generated broadband spectrum of an ideal soliton typically has an overall sech$^2$ spectral profile with most of the energy concentrated around the pump wavelength (e.g., 1030 nm) and tails reaching into the visible wavelength range.

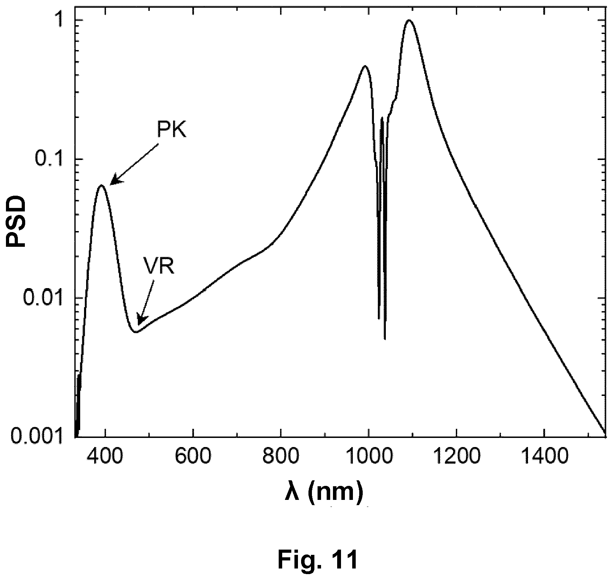

Figure 11 shows an example simulated spectrum of the broadband output radiation ORD generated by the soliton self-compression based spectral broadening of a pulse of pump radiation within the hollow core optical fiber of the radiation source shown in Figure 8. The x-axis is the wavelength $\lambda$ of the input radiation IRD spectrally broadened in the above discussed self-compression regime. The y-axis represents an amount of power per nanometer of the spectrally broadened radiation or power spectral density (PSD), normalized to its maximum value (e.g., at 1090 nm, above the wavelength of the input radiation IRD). As shown in Figure 11, the PSD of the example spectrum exponentially decays away from the pump wavelength (e.g., 1030 nm), thereby strongly limiting the conversion efficiency into the visible wavelength range. The example spectrum is not flat as it has a relatively high peak PK in the wavelength region of the generated dispersive wave (e.g., the dispersive wave 152 shown in Figure 10A) and has a relatively low valley VR immediately after the peak PK. In this particular case, the peak PK centers around 390 nm and the valley VR dips around 470 nm. The normalized PSD of the peak PK (e.g., about 0.06) is about eleven times higher than the PSD of the trough of the valley VR (e.g., about 0.0057). Moreover, the spectrum between 470 nm and 700 nm contains less than 2% of the full integrated PSD, translating for a typical pump-laser system delivering 5W of average power into an average absolute PSD of less than 0.5 mW/nm, which is too low to be of any use in many metrology tools (e.g., scatterometry based metrology tools as described above).

Hence, in this disclosure, methods and apparatuses are proposed to not only further improve the spectral flatness of the broadband output radiation ORD generated in the soliton self-compression regime but also to further increase the PSD of the spectrum in the visible wavelength range. Such improvements may be achieved by using a method of optimizing a temporal profile of a pump pulse which is to undergo spectral broadening via a soliton self-compression process within a working medium inside a HC-PCF, so as to form broadband output radiation; the method comprising: optimizing the temporal profile so as to configure the broadband output radiation to have target spectrum characteristics.

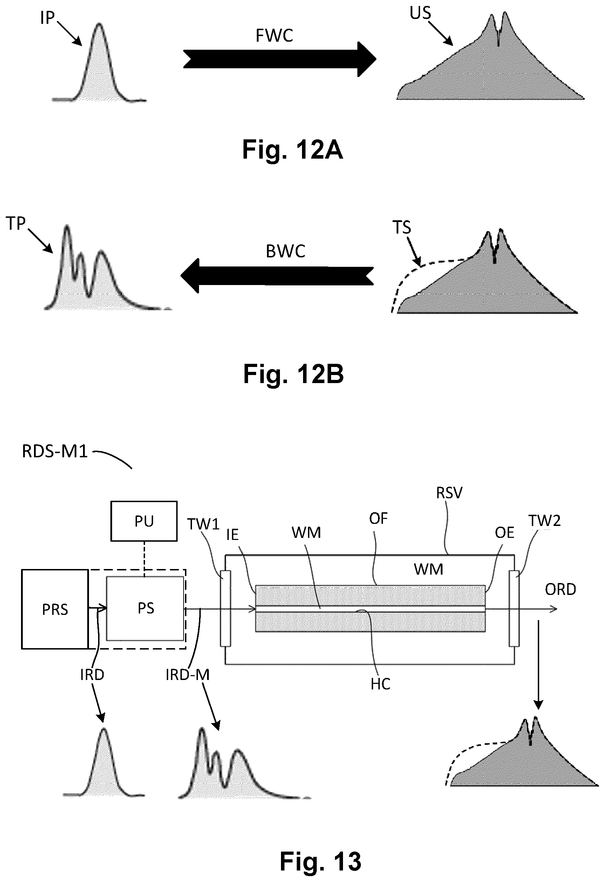

Figure 12A shows a forward soliton self-compression process for converting an input pump pulse IP (e.g., with a Gaussian temporal profile) to broadband output radiation ORD having undesired spectrum characteristics US (e.g., the non-flat spectral profile as shown in Figure 11). The forward soliton self-compression process is the standard process on which a soliton self-compression system is based. The input pump pulse IP may be part of pulsed pump radiation emitted from a pulsed pump radiation source PRS. In the forward process, the input pump pulse IP may be admitted into an input end of the HC-PCF filled with a working medium and may undergo the soliton self-compression process which converts the input pump pulse IP into the broadband output radiation ORD having the undesired spectrum characteristics US. Eventually, the broadband output radiation ORD may exit from an output end of the same fiber.

The inventors have found that one characteristic difference between the soliton self-compression process and the MI process is that the physical process of the soliton self-compression is deterministic. This means that, the pulse evolution can be reversed in time in a numerical manner. In other words, it is possible to reconstruct the initial input pulse (e.g., the input pulse IP shown in Figure 12A) by numerical backward-propagation of the broadband output radiation ORD (e.g., the broadband output radiation ORD having the undesired spectrum characteristics US shown in Figure 12A) generated via the soliton self-compression process through the same fiber under the same conditions. The inventors have found that this deterministic behavior of the soliton self-compression process may allow the characteristics of the broadband output radiation ORD to be tailored according to certain requirements (e.g., requirements of a specific metrology tool). For example, in a scatterometry-based metrology tool, it may be desirable to use a broadband spectrum having a flat spectral profile (e.g., maximum variation < 3 dB) and a high average PSD (e.g., > 5 mW/nm) in a given wavelength range (e.g., between 400 nm and 900 nm, or at least between 500nm and 800nm). Such a desired broadband spectrum may be used to numerically calculate a temporal profile of an input pump pulse which is to undergo spectral broadening via a forward soliton self-compression process (e.g., as shown in Figure 12A) within a working medium inside a HC-PCF, so as to form broadband output radiation ORD.

Figure 12B conceptually illustrates a backward soliton self-compression process for numerically converting broadband output radiation ORD having target spectrum characteristics TS (e.g., the spectral profile indicated by the dashed line) to a target pump pulse TP having a desired or target temporal profile. Note that the backward process is based on a numerical model which simulates the forward soliton self-compression process shown in Figure 12A. In the backward process, the broadband output radiation ORD having the target spectrum characteristics TS may be fed into the output end of the HC-PCF (simulated in the numerical model) and may undergo the soliton self-compression process which converts numerically the broadband output radiation ORD into the target pump pulse TP. Eventually, the target pump pulse MP may be obtained at the input end of the same fiber (simulated in the numerical model). The target pump pulse TP determined numerically in the backward process may then be used to set a reference or target temporal profile against which the input pump pulse is to be shaped.

Figure 13 depicts schematically a first radiation source RDS-M1 equipped with a pulse shaper PS, according to an embodiment, for providing broadband output radiation ORD having target spectrum characteristics. The first radiation source RDS-M1 may differ from the radiation source RDS shown in Figure 8 by the addition of a pulse shaper PS. The pulse shaper PS in Figure 13 may be configured to impose a temporal profile onto a pulse of the input radiation IRD so as to generate a temporally-modulated pump pulse IRD-M, the temporally-modulated pump pulse IRD-M having a different temporal profile than the input pump pulse IRD. The pulse shaper PS may be configured to allow the phase of each spectral bin of a laser pulse to be modified. In an embodiment, the pulse shaper PS may comprise an optical grating and a spatial light modulator (SLM). The optical grating may be configured to spatially disperse the spectrum of the laser pulse. Then, the dispersed spectrum may be projected (e.g., by means of one or more optical mirrors) onto the SLM such that the phase of each constituent wavelength (or each color) can be modified independently. The modified and spatially dispersed laser pulse may be directed back to the same optical grating such that the constituent wavelengths can be recombined to result in a temporally-modulated laser pulse. In an embodiment, the pulse shaper PS may comprise an additional optical grating configured to recombine the modified constituent wavelengths to result in a temporally-modulated laser pulse. In an embodiment, the one or more optical gratings of the pulse shaper PS may be replaced by one or more optical prisms which are configured to perform the same functions (e.g., dispersing and recombining a laser pulse) of optical gratings.

In an embodiment, the temporally-modulated pump pulse IRD-M may comprise a temporal profile having two or more peaks (e.g., the temporal of the target pump pulse shown in Figure 12B). In an embodiment, the temporally-modulated pump pulse IRD-M may comprise a temporal profile having a single peak and an asymmetrical shape (e.g., a non-Gaussian shape).

The HC-PCF may be operable to receive the temporally-modulated pump pulse IRD-M, wherein the temporally-modulated pump pulse IRD-M may be configured to be spectrally broadened by a soliton self-compression process to form broadband output radiation ORD while propagating through the hollow core of the HC-PCF; and said temporal profile is configured so as to configure a spectrum of the broadband output radiation ORD to have target spectrum characteristics. The target spectrum characteristics may comprise for example a spectral flatness of no more than 3 dB, or optionally, no more than 6 dB, or optionally, no more than 9 dB, and an average PSD of at least 3 mW/nm, or optionally, at least 5 mW/nm, or optionally, at least 7 mW/nm. One or both of the spectral flatness and average PSD may be in a wavelength range of between 400 nm and 900 nm, or optionally between 300 nm and 900 nm, or optionally between 300 nm and 1000 nm.

In an embodiment, the temporal profile may comprise a temporal profile as would be obtained from propagation of the broadband output radiation ORD having said target spectrum characteristics through the HC-PCF in a backward direction, the backward direction being opposite to the direction in which the broadband output radiation is formed from the temporally-modulated pump pulse. This temporal profile may be determined numerically using a suitable model to simulate this backward propagation, as has been described.

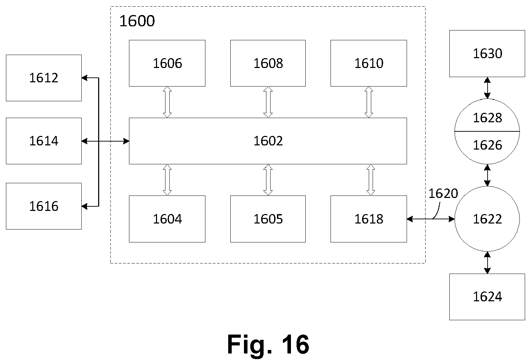

In an embodiment, the first radiation source RDS-M1 may comprise a processor unit PU for controlling the pulse shaper PS. The processor unit may be a computer or computer system as described below with reference to Figure 16. The processor unit PU may be communicatively coupled to the pulse shaper PS. In an embodiment, the processor unit PU may be a standalone unit separate from the first radiation source RDS-M1. In an embodiment, the processor unit PU may be comprised within the first radiation source RDS-M1, e.g., as part of a control unit of the first radiation source RDS-M1, said control unit being configured to control the operation of the first radiation source RDS-M1 and/or comprised within the pulse shaper PS. In an embodiment, the processor unit PU may be further operable to determine the temporal profile imposed by the pulse shaper PS. In an embodiment, the processor unit PU may be operable to determine said temporal profile by performing a numerical propagation of the broadband output radiation ORD having said target spectrum characteristics through the HC-PCF in a backward direction (e.g., the backward soliton self-compression process shown in Figure 12B), the backward direction being opposite to the direction in which the broadband output radiation ORD is formed from the temporally-modulated pump pulse.

In an embodiment, the pulse shaper PS may be comprised in the pulsed pump radiation source PRS. In an embodiment, the processor unit PU may be communicatively coupled to the pulse shaper PS via a control unit of the pulsed pump radiation source PRS, said control unit being configured to control the operation of the pulsed pump radiation source PRS.

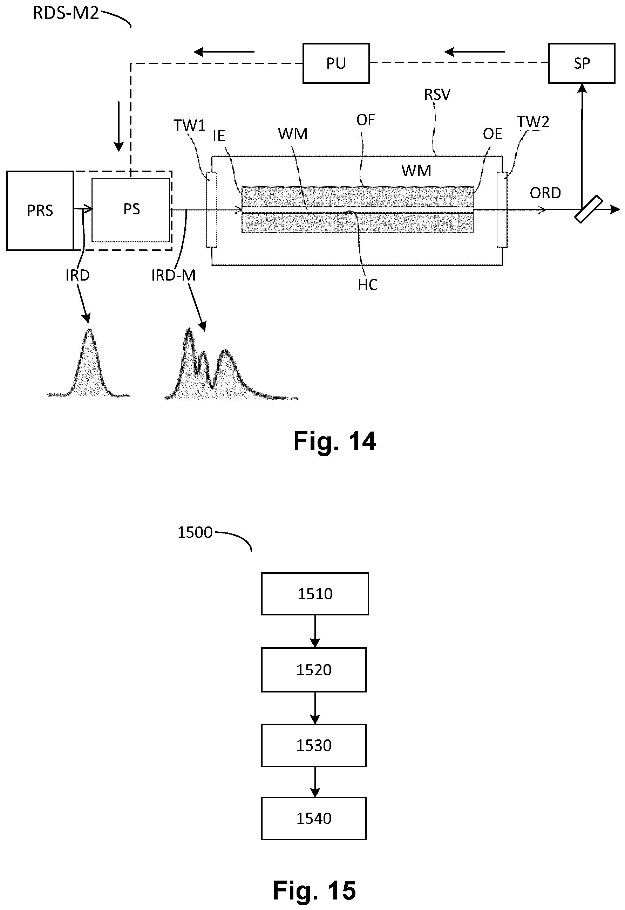

Figure 14 depicts schematically a second radiation source RDS-M2 equipped with a pulse shaper, according to an embodiment, for providing broadband output radiation ORD having target spectrum characteristics. Comparing with the first radiation source RDS-M1, the second radiation source RDS-M2 may additionally comprise a spectrometer configured to measure a spectrum of the broadband output radiation ORD. The spectrometer SP may be communicatively coupled to the processor unit PU which is communicatively coupled to the pulse shaper PS. While the second radiation source RDS-M2 is in operation, the spectrometer SP may acquire a spectrum of the broadband output radiation ORD (either periodically or intermittently) and subsequently transmit the acquired spectrum data to the processor unit PU. The processor unit PU may be operable to perform an analysis on the spectrum data received from the spectrometer SP and transmit a feedback or a command signal to the pulse shaper PS for it to impose a corresponding temporal profile onto the input radiation IRD. As such, the spectrometer SP, processor unit PU and the pulse shaper PS may form a feedback control mechanism allowing for adaptive pulse shaping of the input radiation IRD according to a measured spectrum.

In an embodiment, the processor unit PU may be operable to optimize a temporal profile of a pump pulse which is to undergo spectral broadening via a soliton self-compression process within a working medium inside a HC-PCF, so as to form broadband output radiation ORD. In an embodiment, the optimization of the temporal profile may be achieved by minimizing a difference and/or maximizing a similarity between the measured spectrum of the broadband output radiation ORD and a spectrum defined by target spectrum characteristics. In an embodiment, the first or initial temporal profile of the optimization process may be the temporal profile of a target pump pulse TP determined by numerical backward-propagation of broadband output radiation ORD having target spectrum characteristics through the HC-PCF (e.g., the backward process as shown in Figure 12B). In an embodiment, the first or initial temporal profile may be one of a plurality of candidate temporal profiles generated by the processor unit PU.

With reference to Figure 15, the processor unit PU may be operable to perform an optimization method 1500 comprising the following four main steps.

Step 1510: generate a plurality of candidate temporal profiles, each candidate temporal profile being different to others.

Step 1520: command the pulse shaper PS to impose sequentially each of the plurality of candidate temporal profiles onto a pulse of the input radiation IRD. As such, a plurality of temporally-modulated pump pulses, each with one of the plurality of candidate temporal profiles may be sequentially generated. Each of such temporally-modulated pump pulses will result in generation of an output spectrum that will be measured by the spectrometer SP.

Step 1530: analyze a plurality of measured spectra received from the spectrometer, each measured spectrum resulting from a respective one of the plurality of candidate temporal profiles. In an embodiment, the processor unit PU may be operable to compare each of the plurality of measured spectra with a spectrum defined by the target spectrum characteristics. For example, the processor unit PU may be operable to calculate and then compare the power within a certain wavelength range for the two comparing spectra. Alternatively, the processor unit PU may be operable to calculate and compare the conversion efficiency for the two comparing spectra.

Step 1540: select a candidate temporal profile of said plurality of candidate temporal profiles which maximizes the similarity between the measured spectrum of the broadband output radiation and a spectrum defined by the target spectrum characteristics. In an embodiment, the selected candidate temporal profile may be transmitted to the pulse shaper PS and imposed by the pulse shaper onto the input radiation IRD. In an embodiment, the selected candidate temporal profile may be stored in a memory of the processor unit PU.

In an embodiment, the processor unit PU may be operable to repeat the generation, commanding, analyzing and selection steps (i.e. steps 1510 to 1540) to further optimize the temporal profile (in which case only one candidate temporal profile needs to be generated and analyzed per iteration, and each step may relate to one or more candidate temporal profiles).

In an embodiment, the plurality of candidate temporal profiles may be generated in a predetermined manner. For example, in the case where the first temporal profile is calculated numerically following the above-described backward soliton self-compression process (e.g., as shown in Figure 12B), a plurality of candidate temporal profiles may be generated by incrementally varying the value of a parameter of interest associated with one of the spectrum characteristics (e.g., PSD at one or more specific wavelengths or averaged over a specific wavelength range). Such an approach may allow the first temporal profile to be fine-tuned so as to maximize the similarity (or minimize the difference) between the measured spectrum and a spectrum defined by the target spectrum characteristics.

In an embodiment, the plurality of candidate temporal profiles may be generated randomly and/or independently. For example, in the case where all the temporal profiles are randomly generated by the processor unit PU, the optimal temporal profile may be determined through a search process using a sequential genetic algorithm (or other evolutionary algorithm). Specifically, the processor unit PU may be operable to generate a first set (or population) of candidate temporal profiles which result in a set of measured spectra. The processor unit PU may then be operable to compare each of the resultant set of measured spectra with the spectrum defined by the target spectrum characteristics. The processor unit PU may be operable to identify and store one or more candidate temporal profiles that resulted in maximizing the similarity (or minimizing the difference) between the measured spectrum and the spectrum defined by the target spectrum characteristics. Subsequently, the processor unit PU may be operable to randomly generate a new or second set of candidate temporal profiles. Similarly to how the first set of temporal profiles were processed, the processor unit PU may be operable to identify and store one or more candidate temporal profiles from the second set of temporal profiles. Such a search process may go on until an optimal temporal profile that results in generation of the broadband output radiation having the target spectrum characteristics has been found.

Figure 16 is a block diagram that illustrates a computer system 1600 that may assist in implementing the methods and flows disclosed herein. Computer system 1600 includes a bus 1602 or other communication mechanism for communicating information, and a processor 1604 (or multiple processors 1604 and 1605) coupled with bus 1602 for processing information. Computer system 1600 also includes a main memory 1606, such as a random access memory (RAM) or other dynamic storage device, coupled to bus 1602 for storing information and instructions to be executed by processor 1604. Main memory 1606 also may be used for storing temporary variables or other intermediate information during execution of instructions to be executed by processor 1604. Computer system 1600 further includes a read only memory (ROM) 1608 or other static storage device coupled to bus 1602 for storing static information and instructions for processor 1604. A storage device 1610, such as a magnetic disk or optical disk, is provided and coupled to bus 1602 for storing information and instructions.

Computer system 1600 may be coupled via bus 1602 to a display 1612, such as a cathode ray tube (CRT) or flat panel or touch panel display for displaying information to a computer user. An input device 1614, including alphanumeric and other keys, is coupled to bus 1602 for communicating information and command selections to processor 1604. Another type of user input device is cursor control 1616, such as a mouse, a trackball, or cursor direction keys for communicating direction information and command selections to processor 1604 and for controlling cursor movement on display 1612. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1600 in response to processor 1604 executing one or more sequences of one or more instructions contained in main memory 1606. Such instructions may be read into main memory 1606 from another computer-readable medium, such as storage device 1610. Execution of the sequences of instructions contained in main memory 1606 causes processor 1604 to perform the process steps described herein. One or more processors in a multi-processing arrangement may also be employed to execute the sequences of instructions contained in main memory 1606. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1604 for execution. Such a medium may take many forms, including but not limited to, non-volatile media, volatile media, and transmission media. Non-volatile media include, for example, optical or magnetic disks, such as storage device 1610. Volatile media include dynamic memory, such as main memory 1606. Transmission media include coaxial cables, copper wire and fiber optics, including the wires that comprise bus 1602. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1604 for execution. For example, the instructions may initially be borne on a magnetic disk of a remote computer. The remote computer can load the instructions into its dynamic memory and send the instructions over a telephone line using a modem. A modem local to computer system 1600 can receive the data on the telephone line and use an infrared transmitter to convert the data to an infrared signal. An infrared detector coupled to bus 1602 can receive the data carried in the infrared signal and place the data on bus 1602. Bus 1602 carries the data to main memory 1606, from which processor 1604 retrieves and executes the instructions. The instructions received by main memory 1606 may optionally be stored on storage device 1610 either before or after execution by processor 1604.

Computer system 1600 also preferably includes a communication interface 1618 coupled to bus 1602. Communication interface 1618 provides a two-way data communication coupling to a network link 1620 that is connected to a local network 1622. For example, communication interface 1618 may be an integrated services digital network (ISDN) card or a modem to provide a data communication connection to a corresponding type of telephone line. As another example, communication interface 1618 may be a local area network (LAN) card to provide a data communication connection to a compatible LAN. Wireless links may also be implemented. In any such implementation, communication interface 1618 sends and receives electrical, electromagnetic or optical signals that carry digital data streams representing various types of information.

Network link 1620 typically provides data communication through one or more networks to other data devices. For example, network link 1620 may provide a connection through local network 1622 to a host computer 1624 or to data equipment operated by an Internet Service Provider (ISP) 1626. ISP 1626 in turn provides data communication services through the worldwide packet data communication network, now commonly referred to as the "Internet" 1628. Local network 1622 and Internet 1628 both use electrical, electromagnetic or optical signals that carry digital data streams. The signals through the various networks and the signals on network link 1620 and through communication interface 1618, which carry the digital data to and from computer system 1600, are exemplary forms of carrier waves transporting the information.

Computer system 1600 may send messages and receive data, including program code, through the network(s), network link 1620, and communication interface 1618. In the Internet example, a server 1630 might transmit a requested code for an application program through Internet 1628, ISP 1626, local network 1622 and communication interface 1618. One such downloaded application may provide for one or more of the techniques described herein, for example. The received code may be executed by processor 1604 as it is received, and/or stored in storage device 1610, or other non-volatile storage for later execution. In this manner, computer system 1600 may obtain application code in the form of a carrier wave.

Further embodiments are disclosed in the subsequent list of numbered clauses:

1. A broadband radiation device, comprising:

   a pulse shaper configured to impose a temporal profile onto an input pump pulse so as to generate a temporally-modulated pump pulse, the temporally-modulated pump pulse having a different temporal profile than the input pump pulse; and
   a hollow-core photonic crystal fiber (HC-PCF) having a hollow core for confining in use a working medium under a pressure, the HC-PCF being operable to receive the temporally-modulated pump pulse;
   wherein the temporally-modulated pump pulse is configured to be spectrally broadened by a soliton self-compression process to form broadband output radiation while propagating through the hollow core of the HC-PCF; and said temporal profile is configured so as to configure a spectrum of the broadband output radiation to have target spectrum characteristics.

2. A broadband radiation device as defined in clause 1, wherein the temporal profile comprises a temporal profile as would be obtained from numerical propagation of the broadband output radiation having said target spectrum characteristics through the HC-PCF in a backward direction, the backward direction being opposite to the direction in which the broadband output radiation is formed from the temporally-modulated pump pulse.

3. A broadband radiation device as defined in clause 1 or 2, comprising a processor unit for controlling the pulse shaper, the processor unit being further operable to determine the temporal profile imposed by the pulse shaper.

4. A broadband radiation device as defined in clause 3, wherein the processor unit is operable to determine said temporal profile by performing a numerical propagation of the broadband output radiation having said target spectrum characteristics through the HC-PCF in a backward direction, the backward direction being opposite to the direction in which the broadband output radiation is formed from the temporally-modulated pump pulse.

5. A broadband radiation device as defined in clause 3 or 4, comprising a spectrometer to measure a spectrum of the broadband output radiation;

   wherein the processor unit is operable to optimize said temporal profile so as to minimize a difference and/or maximize a similarity between the measured spectrum of the broadband output radiation with respect to a spectrum defined by said target spectrum characteristics.

6. A broadband radiation device as defined in clause 5, wherein the processor unit is operable to:

generate a plurality of candidate temporal profiles;
command the pulse shaper PS to impose each of the plurality of candidate temporal profiles onto a respective pump pulse so as to obtain a plurality of temporally-modulated pump pulses;
analyze a plurality of measured spectra received from the spectrometer, each measured spectrum resulting from a respective one of the plurality of candidate temporal profiles; and
select, based on the analysis, a candidate temporal profile of said plurality of candidate temporal profiles which maximize the similarity between the measured spectrum of the broadband output radiation with respect to a spectrum defined by said target spectrum characteristics.

7. A broadband radiation device as defined in clause 6, being operable to repeat the generation, commanding, analyzing and selection steps to further optimize the temporal profile.

8. A broadband radiation device as defined in any of clauses 1 to 6, being operable to determine the temporal profile through a search process using a sequential genetic algorithm or evolutionary algorithm

9. A broadband radiation device as defined in any preceding clause, wherein the temporally-modulated pump pulse comprises a temporal profile having two or more peaks.

10. A broadband radiation device as defined in any preceding clause, wherein the target spectrum characteristics comprise an average power spectral density (PSD) of at least 5 mW/nm in the wavelength range between 400 nm and 900 nm.

11. A broadband radiation device as defined in any preceding clause, wherein the target spectrum characteristics comprise a spectral profile having a maximum variation of 3dB in the wavelength range between 400 nm and 900 nm.

12. A broadband radiation device as defined in any preceding clause, further comprising a pump laser configured to output the pump pulse.

13. A broadband radiation device as defined in clause 12, wherein the pulse shaper is comprised in the pump laser.

14. A metrology device comprising a broadband radiation device as defined in any preceding clause.

15. A metrology device as defined in clause 14, comprising a scatterometer metrology apparatus, a level sensor or an alignment sensor.

16. A method of optimizing a temporal profile of a pump pulse which is to undergo spectral broadening via a soliton self-compression process within a working medium inside a hollow-core photonic crystal fiber (HC-PCF), so as to form broadband output radiation; the method comprising:
optimizing the temporal profile so as to configure the broadband output radiation to have target spectrum characteristics.

17. A method as defined in clause 16, wherein the step of optimizing the temporal profile comprises performing a numerical propagation of broadband output radiation having said target spectrum characteristics through the HC-PCF in a backward direction, the backward direction being opposite to the direction in which the broadband output radiation is formed from the temporally-modulated pump pulse.

18. A method as defined in clause 16 or 17, wherein the step of optimizing the temporal profile comprises minimizing a difference and/or maximizing a similarity between a measured spectrum of the broadband output radiation with respect to a spectrum defined by said target spectrum characteristics.

19. A method as defined in any of clauses 16 to 18, comprising the steps of:

generating a plurality of candidate temporal profiles;
commanding the pulse shaper PS to impose each of the plurality of candidate temporal profiles onto a respective pump pulse so as to obtain a plurality of temporally-modulated pump pulses;
analyzing a plurality of measured spectra received from the spectrometer, each measured spectrum resulting from a respective one of the plurality of candidate temporal profiles; and
selecting, based on said analysis, a candidate temporal profile of said plurality of candidate temporal profiles which maximizing the similarity between the measured spectrum of the broadband output radiation with respect to a spectrum defined by said target spectrum characteristics.

20. A method as defined in clause 19, comprising repeating the generation, commanding, analyzing and selection steps to further optimize the temporal profile.

21. A method as defined in any of clauses 16 to 19, wherein the temporal profile is determined through a search process using a sequential genetic algorithm or evolutionary algorithm.

22. A method of generating broadband output radiation with target spectrum characteristics, the method comprising:

imposing a temporal profile onto an input pump pulse so as to generate the temporally-modulated pump pulse, the temporally-modulated pump pulse having a different temporal profile than the input pump pulse, the temporal profile being configured so as to configure a spectrum of the broadband output radiation to have target spectrum characteristics;

using the temporally-modulated pump pulse to excite a working medium within a hollow-core photonic crystal fiber (HC-PCF) such that the temporally-modulated pump pulse is spectrally broadened by a soliton self-compression process to form said broadband output radiation with said target spectrum characteristics.

23. A method as defined in clause 22, wherein the temporal profile comprises a temporal profile as optimized in any of clauses 16 to 21.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A broadband radiation device, comprising:

   a pulse shaper configured to impose a temporal profile onto an input pump pulse so as to generate a temporally-modulated pump pulse, the temporally-modulated pump pulse having a different temporal profile than the input pump pulse; and
   a hollow-core photonic crystal fiber (HC-PCF) having a hollow core for confining in use a working medium under a pressure, the HC-PCF being operable to receive the temporally-modulated pump pulse;
   wherein the temporally-modulated pump pulse is configured to be spectrally broadened by a soliton self-compression process to form broadband output radiation while propagating through the hollow core of the HC-PCF; and said temporal profile is configured so as to configure a spectrum of the broadband output radiation to have target spectrum characteristics.

2. A broadband radiation device as claimed in claim 1, wherein the temporal profile comprises a temporal profile as would be obtained from numerical propagation of the broadband output radiation having said target spectrum characteristics through the HC-PCF in a backward direction, the backward direction being opposite to the direction in which the broadband output radiation is formed from the temporally-modulated pump pulse.

3. A broadband radiation device as claimed in claim 1 or 2, comprising a processor unit for controlling the pulse shaper, the processor unit being further operable to determine the temporal profile imposed by the pulse shaper.

4. A broadband radiation device as claimed in claim 3, wherein the processor unit is operable to determine said temporal profile by performing a numerical propagation of the broadband output radiation having said target spectrum characteristics through the HC-PCF in a backward direction, the backward direction being opposite to the direction in which the broadband output radiation is formed from the temporally-modulated pump pulse.

5. A broadband radiation device as claimed in claim 3 or 4, comprising a spectrometer to measure a spectrum of the broadband output radiation;

wherein the processor unit is operable to optimize said temporal profile so as to minimize a difference and/or maximize a similarity between the measured spectrum of the broadband output radiation with respect to a spectrum defined by said target spectrum characteristics.

6. A broadband radiation device as claimed in claim 5, wherein the processor unit is operable to:

generate a plurality of candidate temporal profiles;
command the pulse shaper PS to impose each of the plurality of candidate temporal profiles onto a respective pump pulse so as to obtain a plurality of temporally-modulated pump pulses;
analyze a plurality of measured spectra received from the spectrometer, each measured spectrum resulting from a respective one of the plurality of candidate temporal profiles; and
select, based on the analysis, a candidate temporal profile of said plurality of candidate temporal profiles which maximize the similarity between the measured spectrum of the broadband output radiation with respect to a spectrum defined by said target spectrum characteristics.

7. A broadband radiation device as claimed in claim 6, being operable to repeat the generation, commanding, analyzing and selection steps to further optimize the temporal profile.

8. A broadband radiation device as claimed in any of claims 1 to 6, being operable to determine the temporal profile through a search process using a sequential genetic algorithm or evolutionary algorithm

9. A broadband radiation device as claimed in any preceding claim, wherein the temporally-modulated pump pulse comprises a temporal profile having two or more peaks.

10. A broadband radiation device as claimed in any preceding claim, wherein the target spectrum characteristics comprise an average power spectral density (PSD) of at least 5 mW/nm in the wavelength range between 400 nm and 900 nm.

11. A broadband radiation device as claimed in any preceding claim, wherein the target spectrum characteristics comprise a spectral profile having a maximum variation of 3dB in the wavelength range between 400 nm and 900 nm.

12. A metrology device comprising a broadband radiation device as claimed in any preceding claim.

13. A method of optimizing a temporal profile of a pump pulse which is to undergo spectral broadening via a soliton self-compression process within a working medium inside a hollow-core photonic crystal fiber (HC-PCF), so as to form broadband output radiation; the method comprising:
optimizing the temporal profile so as to configure the broadband output radiation to have target spectrum characteristics.

14. A method as claimed in claim 13, wherein the step of optimizing the temporal profile comprises performing a numerical propagation of broadband output radiation having said target spectrum characteristics through the HC-PCF in a backward direction, the backward direction being opposite to the direction in which the broadband output radiation is formed from the temporally-modulated pump pulse.

15. A method as claimed in any of claims 13 or 14, comprising the steps of:

generating a plurality of candidate temporal profiles;
commanding the pulse shaper PS to impose each of the plurality of candidate temporal profiles onto a respective pump pulse so as to obtain a plurality of temporally-modulated pump pulses;
analyzing a plurality of measured spectra received from the spectrometer, each measured spectrum resulting from a respective one of the plurality of candidate temporal profiles; and
selecting, based on said analysis, a candidate temporal profile of said plurality of candidate temporal profiles which maximizing the similarity between the measured spectrum of the broadband output radiation with respect to a spectrum defined by said target spectrum characteristics.

**Fig. 1**

**Fig. 2**

**Fig. 3**

**Fig. 4**

LSO

LSP

LSD

LS

LSB

PGR

BE1

ANG

DET

DGR

BE2

Z

X

W

MLO

**Fig. 5**

PU

PD

SRI

RB

SM

IB

RSO

SI

OL

AS

AM

SP

W

**Fig. 6**

OF

CAP          SP

WP                                    WP

CC    CC

WP            CC         CC            HC

CC    CC

y

CAP                                   CAP

x

WP

**Fig. 7**

RDS

RSV

TW1   IE      WM       OF        OE   TW2

WM

PRS   IRD                                 ORD

HC

**Fig. 8**

ST

(a)          (b)

**Fig. 9**

**Fig. 10A**

**Fig. 10B**

**Fig. 11**

IP

FWC

US

**Fig. 12A**

TP

BWC

TS

**Fig. 12B**

RDS-M1

PU

TW1

IE

WM

OF

RSV

OE

TW2

PRS

PS

ORD

IRD

IRD-M

WM

HC

**Fig. 13**

**Fig. 14**

**Fig. 15**

**Fig. 16**

Europäisches
Patentamt

European
Patent Office

Office européen
des brevets

# EUROPEAN SEARCH REPORT

**Application Number**

EP 22 17 1192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 160 137 B1 (ABDOLVAND AMIR [DE] ET AL) 13 October 2015 (2015-10-13)<br>* column 11 - lines 5-10 *<br>* figure 1 *<br>* column 13, lines 9-15; figure 6 * | 1,2,13, 14 | INV.<br>G02F1/35<br>G02F1/365 |
| X | WELCH M G ET AL: "Solitons in Hollow Core Photonic Crystal Fiber: Engineering Nonlinearity and Compressing Pulses",<br>JOURNAL OF LIGHTWAVE TECHNOLOGY, IEEE, USA,<br>vol. PP, no. 11, 1 June 2009 (2009-06-01), pages 1644-1652, XP011261493,<br>ISSN: 0733-8724<br>* page 1649, right column, section B "Experiment" *<br>* abstract * | 1,2,13, 14 | |
| A | YAMUNADEVI R ET AL: "Generation of low power and ultrashort laser pulses at 800 nm through soliton compression in chloroform-infiltrated cascaded photonic crystal fibers",<br>JOURNAL OF APPLIED PHYSICS, AMERICAN INSTITUTE OF PHYSICS, 2 HUNTINGTON QUADRANGLE, MELVILLE, NY 11747,<br>vol. 124, no. 11,<br>19 September 2018 (2018-09-19),<br>XP012231696,<br>ISSN: 0021-8979, DOI: 10.1063/1.5042633<br>[retrieved on 2018-09-19]<br>* the whole document * | 1-15 | **TECHNICAL FIELDS SEARCHED (IPC)**<br><br>G02F |
| A | US 2014/334763 A1 (HOLZER PHILIPP [DE] ET AL) 13 November 2014 (2014-11-13)<br>* abstract *<br>* figure 1 * | 1-15 | |

The present search report has been drawn up for all claims

| Place of search | Date of completion of the search | Examiner |
|---|---|---|
| The Hague | 19 September 2022 | Gill, Richard |

EPO FORM 1503 03.82 (P04C01)

## ANNEX TO THE EUROPEAN SEARCH REPORT
## ON EUROPEAN PATENT APPLICATION NO.

EP 22 17 1192

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2022

| Patent document cited in search report | | Publication date | Patent family member(s) | | Publication date |
|---|---|---|---|---|---|
| US 9160137 | B1 | 13-10-2015 | NONE | | |
| US 2014334763 | A1 | 13-11-2014 | CA | 2849690 A1 | 08-11-2014 |
| | | | EP | 2802043 A1 | 12-11-2014 |
| | | | JP | 2014219677 A | 20-11-2014 |
| | | | US | 2014334763 A1 | 13-11-2014 |

EPO FORM P0459

For more details about this annex : see Official Journal of the European Patent Office, No. 12/82

**REFERENCES CITED IN THE DESCRIPTION**

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A
- US 20160370717 A1
- US 7265364 B
- US 7646471 B
- US 2010233600 A1
- WO 2016102127 A1
- US 6961116 B
- US 2015261097 A1
- US 2004015085 A1
- WO 2017032454 A1
- WO 2018127266 A1
- US 9160137 B1